# DEMANDE DE BREVET EUROPEEN

(11) **EP 0 691 315 A1**
(43) Date de publication de la demande: **10.01.1996**
(21) Numéro de dépôt: 95401589.7
(22) Date de dépôt: 03.07.1995
(51) Int. Cl.: C04B 33/18, C09K 7/02

(54) **Procédé de préparation de mélanges aqueux argileux pompables**

(30) Priorité: 08.07.1994 FR 9408456
(71) Demandeur: RHONE-POULENC CHIMIE, F-92408 Courbevoie Cédex (FR)
(72) Inventeur: David, Claire, F-75014 Paris (FR); Mercier, Jean-Michel, F-94320 Thiais (FR)
(74) Mandataire: Fabre, Madeleine-France

(57) **Abrégé**

Procédé pour améliorer la mise en oeuvre et la maniabilité de mélanges aqueux à base d'argile, consistant à ajouter audit mélange aqueux à base d'argile une composition tensioactive constituée d'au moins un ester de carbohydrate et/ou un ester de polyol et d'au moins un triglycéride alkoxylé et/ou au moins un acide gras alkoxylé.

Utilisation dudit procédé pour l'extraction de matériaux argileux du sous-sol.

Utilisation des mélanges argileux de maniabilité améliorée pour la préparation de matériaux divers (briques, tuiles ...)

## Description

La présente invention a trait à un procédé permettant d'améliorer la mise en oeuvre et la maniabilité des mélanges aqueux à base d'argile et vise également les mélanges ainsi transformés.

De manière générale, les argiles sont constituées de silicates d'aluminium, silicates de fer et/ou silicates de magnésium hydratées et peuvent contenir en outre d'autres ions, dont plus particulièrement les ions sodium, calcium et potassium. Ces silicates sont communément appelées argiles minérales. Les principaux groupes d'argiles minérales sont les kaolinites, les smectites, les illites, les chlorites et les hormites.

Du fait de leur abondance terrestre et de leurs propriétés diverses, étroitement liées à leurs compositions minérales, les argiles sont des matériaux qui possèdent des utilisations très variées et qui font donc l'objet d'importantes exploitations.

L'extraction souterraine de l'argile, soit en vue de son exploitation ou dans le cadre de travaux de construction du type creusement de galeries souterraines, nécessite habituellement sa transformation en une bouillie aqueuse par incorporation d'eau. Cette bouillie aqueuse ou encore boue aqueuse est ensuite évacuée des cavités souterraines grâce à des pompes. Le pourcentage en particules solides de cette bouillie aqueuse d'argile est normalement compris entre 30 et 40%, mais il peut également excéder 70%. Dans ce dernier cas, il devient difficile d'obtenir une pâte suffisamment fluide pour être pompable.

Pour remédier à cet inconvénient, on a préconisé d'ajouter à ces bouillies aqueuses d'argile, un agent dispersant chimique ayant pour rôle de les amener sous une forme plus fluide et plus facile à pomper. Les agents dispersants les plus couramment utilisés sont des sels hydrosolubles de polyphosphate, silicate ou de polyacrylate. Toutefois, l'emploi de ces produits ne donne pas entière satisfaction.

Il a maintenant été trouvé - et c'est ce qui constitue l'objet de la présente invention - qu'il était possible de remplacer avantageusement l'agent dispersant tel que décrit ci-dessus par une composition tensio-active comprenant un agent dispersant et un agent mouillant.

Plus particulièrement, la présente invention se rapporte à un procédé pour améliorer la mise en oeuvre et la maniabilité de mélanges aqueux à base d'argile, caractérisé en ce qu'il consiste à ajouter audit mélange aqueux d'argile une composition tensio-active constituée de :
- 10 à 90 parties en poids, de préférence de 25 à 75 parties en poids, d'au moins un ester de carbohydrate et/ou un ester de polyol
- et de 90 à 10 parties en poids, de préférence de 75 à 25 parties en poids, d'un triglycéride alkoxylé et/ou au moins un acide gras alkoxylé.

On a constaté, de manière surprenante, que par rapport au procédé classique, seul le procédé selon l'invention permet de conduire dans un délai très bref à des mélanges aqueux argileux, dotés de propriétés plastiques telles que leur pompabilité en est très nettement améliorée.

En outre, il convient de noter que le procédé selon l'invention peut être utilisé en toute sécurité vis-à-vis de l'environnement, compte tenu de la totale biodégrabilité de la composition tensio-active utilisée selon l'invention.

Par plasticité, on entend désigner l'aptitude de l'argile humidifiée à se déformer à l'application d'une faible pression et à conserver cette déformation après extinction de cette pression.

Le terme argile désigne selon la présente invention, et conformément à la définition de GRIM (Clay Mineralogy 1st ed. Mc Graw-Hill, N.Y. 1953, p.384), tout matériau argilacé d'origine naturelle, finement granulé et plus particulièrement les argiles et schistes.

Comme exemple d'esters de polyol, on peut mentionner :
- les esters d'acides gras en C₈-C₂₂, de préférence en C₁₀-C₂₀, et de sorbitan, tel le laurate de sorbitan, l'oléate de sorbitan ...,
- les esters d'acides gras en C₈-C₂₂, de préférence en C₁₀-C₂₀, et de glycérol, comme les monoglycérides et les diglycérides alimentaires
- le polyglycérol polyricinoléate ...

En ce qui concerne les esters de carbohydrates, on peut citer plus particulièrement les sucres estérifiés ou transestérifiés, tels que les sucroglycérides et les sucroesters. Il s'agit de préférence de sucroglycérides.

Par le terme sucroglycéride, on désigne de manière générale le mélange de produits obtenus par la transestérification du saccharose et de triglycérides naturels ou de synthèse. Ce mélange contient des monoglycérides, des diglycérides, des triglycérides inaltérés (en faibles quantités), des monoesters et des diesters de saccharose.

Quant au terme triglycéride, il désigne un ou plusieurs triglycérides d'acides gras aliphatiques saturés ou insaturés, ayant au moins 12 atomes de carbone et de préférence 14 à 20 atomes de carbone. On peut évidemment partir d'un triglycéride de synthèse obtenu par réaction du glycérol et d'acide gras mais , pour des raisons économiques, il est plus intéressant de faire appel aux triglycérides naturels qui sont des mélanges. A titre d'exemple de triglycérides naturels on peut citer le saindoux, le suif, l'huile d'arachide, l'huile de beurre, l'huile de graines de coton, l'huile de lin, l'huile de noix de coco, l'huile d'olive, l'huile de palme, l'huile de pépin de raisin, l'huile de poisson, l'huile de soja, l'huile de ricin, l'huile de coprah et l'huile de colza.

On emploie préférentiellement, les sucroglycérides de saindoux, d'huile de palme, de coprah, de suif et de colza. Ils se présentent sous une une forme liquide ou sous forme de pâtes plus ou moins consistantes se différenciant commercialement par leur point de fusion.

Un mode préparatoire particulièrement adapté à ces sucroglycérides est décrit dans la demande de brevet FR 2 463 512.

En ce qui concerne le second constituant de la composition tensio-active employée selon l'invention, il peut s'agir :
- de triglycérides en C₁₂-C₂₂ alkoxylés, contenant environ de 1 à 60 motifs oxyalkylène, tels que les huiles éthoxylées d'origine végétale ou animale comme l'huile de ricin, poisson, coprah, soja, palme, suif, beurre... éthoxylée par exemple, ou
- d'un acide gras en C₈-C₂₂, de préférence en C₁₀-C₂₀, alkoxylé contenant environ de 1 à 60 motifs oxyalkylène, tel l'acide oléique ou stéarique éthoxylé par exemple.

Le terme triglycéride "alkoxylé" vise dans la présente invention, aussi bien les produits obtenus par alkoxylation d'un triglycéride par un oxyde d'alkylène que ceux obtenus par transestérification d'un triglycéride par un polyalkylèneglycol.

De même, acide gras "alkoxylé' couvre aussi bien les produits obtenus par alkoxylation d'un acide gras par un oxyde d'alkylène, que ceux obtenus par estérification d'un acide gras par un polyalkylèneglycol.

Les agents de surface préférentiels formant le deuxième constituant de la composition tensio-active sont les huiles éthoxylées et, en particulier, leurs mélanges.

La composition tensio-active de l'invention peut être préparée par mélange de ses différents constituants à l'état liquide. Dans le cas privilégié où l'un des constituants est un sucroglycéride solide à température ambiante, celui-ci est fondu vers 60 à 80°C avant d'y incorporer les autres composants à l'état liquide.

A titre de composition tensio-active, on emploie de préférence selon l'invention, un mélange de sucroglycéride et d'au moins un ester polyéthylèneglycolique d'acides gras.

De préférence, le mélange aqueux à base d'argile comprend au moins 30% et, de préférence, plus de 70% en poids de particules solides.

La composition tensio-active selon l'invention peut être introduite, soit directement dans le mélange aqueux à base d'argile soit incorporée en mélange avec l'eau dans l'argile.

La quantité de composition tensio-active introduite dans le mélange aqueux à base d'argile peut varier dans de larges limites.

Toutefois, l'introduction de cette composition se fait plus particulièrement selon une quantité de l'ordre de 0,1 à 10 %, et de préférence de l'ordre de 0.5% à 8% en poids par rapport au poids du mélange aqueux à base d'argile.

Le procédé selon l'invention s'applique avec succès à l'extraction de matériaux argileux du sous-sol et est, bien entendu, également intéressant pour la transformation ulltérieure de mélanges aqueux d'argiles en matériaux divers comme les briques ou céramiques par exemple.

En effet, du point de vue utilisation, les kaolinites sont employées pour le couchage du papier et pour la fabrication de céramiques, les illites et kaolinites en mélanges sont utilisées pour la fabrication des tuiles et des briques. Les montmorillonites et attapulgites interviennent comme absorbants dans de nombreux procédés de purification. Les montmorillonites sont aussi des constituants importants des boues de forage. Enfin, la plasticité des kaolins et montmorillonites est également mise à profit pour la fabrication des moules de fonderie. Le procédé selon la présente invention est par conséquent susceptible d'être mis en oeuvre efficacement pour l'une ou l'autre des applications précitées.

La présente invention vise également les mélanges aqueux argileux incorporant la composition tensio-active décrite selon l'invention, de même que les divers matériaux issus de ces mélanges aqueux argileux, sous réserve qu'ils contiennent également ladite composition tensio-active.

Les exemples présentés ci-après à titre illustratif.

Ceux-ci ont été réalisés par incorporation à des mélanges eau/argile, de différents systèmes tensio-actifs. La plasticité des mélanges résultants a été mesurée à l'aide d'un dispositif BRABENDER (malaxeur à pâles) ; cette mesure consiste à enrégistrer la résistance opposée par une pâte au malaxage ; plus une pâte oppose une résistance importante au malaxage (viscosité BRABENDER élevée), plus elle est visqueuse et/ou non homogène ; la viscosité BRABENDER est nulle quand la pâte est très fluide et homogène.

### Exemple 1

On prépare un mélange aqueux à partir des constituants suivants :
- 5 g d'eau
- 20 g d'argile
- 2 g de CELYNOL X8066 (commercialisé par RHONE-POULENC) constitué de
   . 1/3 d'huile de ricin éthoxylée
   . 1/3 d'huile de coprah éthoxylée
   . 1/3 de sucroglycéride de colza

L'aspect de cette composition figure au tableau I.

### Exemple 2

On prépare un mélange aqueux à partir des constituants suivants :
- 20 g d'eau
- 20 g d'argile
- 2 g de CELYNOL X8066 (commercialisé par RHONE-POULENC) constitué de
   . 1/3 d'huile de ricin éthoxylée
   . 1/3 d'huile de coprah éthoxylée
   . 1/3 de sucroglycéride de colza

L'aspect de cette composition figure au tableau I.

A titre comparatif, des compositions semblables à celles des exemples 1 et 2 ont été réalisées en remplaçant le CELYNOL X8066 par le même poids d'un des tensio-actifs ou mélange de tesio-actifs suivants :
- siliconate de potassium T51 de RHONE-POULENC
- GEROPON HB (polyacrylate de Na commercialisé par RHONE-POULENC)
- SOPROPHOR BC 10 (nonyphénol commercialisé par RHONE-POULENC)
- un mélange 50 / 50 SOPROPHOR BC 10 / siliconate de potassium T51

Les aspects de ces compositions figurent au tableau I.

**TABLEAU I**

| **TENSIO-ACTIF** | **aspect pour 5g d'eau** | **aspect pour 20g d'eau** |
|---|---|---|
| **SILICONATE T51** | mélange difficile liquide et nombreux agglomérats | liquide sédimendation des agglomérats |
| **GEROPON HB** | pâte plus au moins liquide agglomérats | pâte fluide nombreux agglomérats |
| **SOPROPHOR BC 10** | mélange sec, mousseux agglomérats | mousse fine assez homogène flocculation après 24h |
| **SOPROPHOR BC 10 / SILICONATE T51** | pâte assez homogène fins agglomérats | pâte fluides quelques agglomérats flocculation après 24h |
| **CELYNOL X8066** | pâte homogène pompable | pâte homogène pompable |

### Exemple 3

On prépare un mélange aqueux à partir des constituants suivants :
- 400 g d'argile de Flandres
- 100 g d'eau
- un des tensio-actifs figurant au tableau II, selon un % par rapport au mélange argile + eau figurant au tableau II

La plasticité BRABENDER des mélanges obtenus figure au tableau II

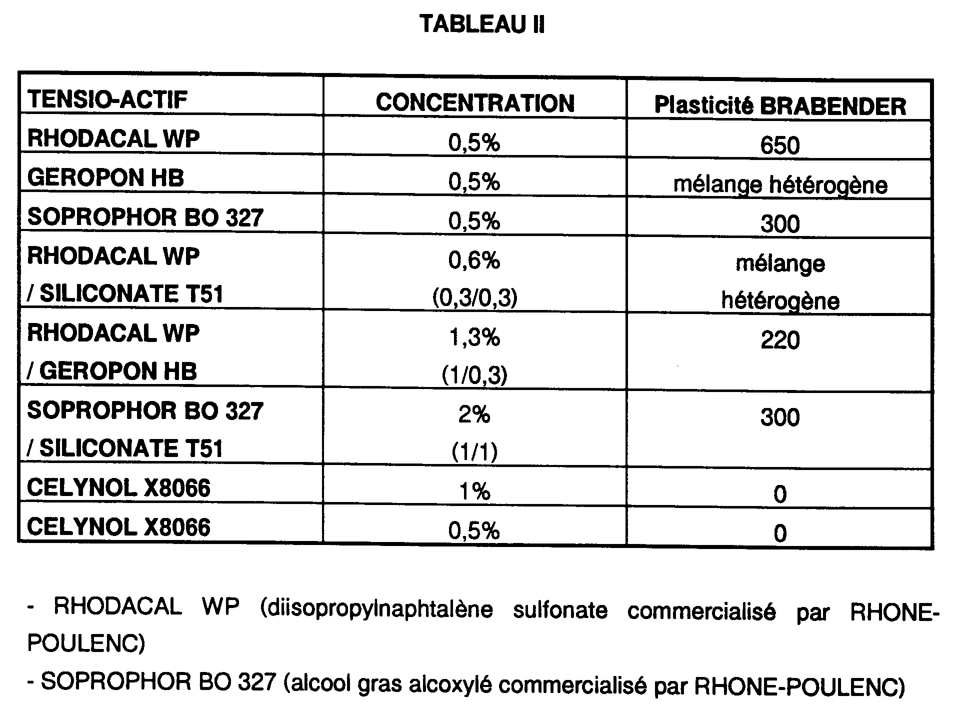

Seul l'emploi du CELYNOL X8066 permet donc de conduire à une plasticité nulle, donc à une bonne maniabilité du mélange argileux traité.

### Exemple 4

Dans cet exemple, a été mesuré le délai pour atteindre l'équilibre de la plasticité, c'est-à dire le temps nécessaire pour atteindre le mélange ; un temps court traduit la facilité avec laquelle l'eau s'incorpore à l'argile.
Le mélange de l'exemple 3 selon l'invention (avec 0,5% de CELYNOL X8066) a été comparé au mélange contenant 0,5% de RHODACAL WP, ainsi qu'au mélange témoin eau/argile.
Les résultats obtenus figurent au tableau III

**TABLEAU III**

| **MELANGE** | **plasticité BRABENDER** | **TEMPS pour atteindre l'équilibre (secondes)** |
|---|---|---|
| **eau/argile** | 1000 | |
| **eau/argile/RHODACAL WP** | 650 | 120 |
| **eau/argile/CELYNOL X8066** | 0 | 60 |

Le meilleur résultat obtenu est bien celui du mélange de l'invention.

## Revendications

**1)** Procédé pour améliorer la mise en oeuvre et la maniabilité de mélanges aqueux à base d'argile, caractérisé en ce qu'il consiste à ajouter audit mélange aqueux à base d'argile une composition tensio-active constituée de :
- 10 à 90 parties en poids, de préférence de 25 à 75 parties en poids, d'au moins un ester de carbohydrate et/ou un ester de polyol
- et de 90 à 10 parties en poids, de préférence de 75 à 25 parties en poids, d'un triglycéride alkoxylé et/ou au moins un acide gras alkoxylé.

**2)** Procédé selon la revendication 1), caractérisé en ce que l'ester de polyol est un ester d'acide gras en C₈-C₂₂, de préférence en C₁₀-C₂₀, et de sorbitan, un ester d'acides gras en C₈-C₂₂, de préférence en C₁₀-C₂₀, et de glycérol, le polyglycérol polyricinoléate.

**3)** Procédé selon la revendication 1) ou 2), caractérisé en ce que l'ester de carbohydrate est un sucroglycéride ou un sucroester.

**4)** Procédé selon l'une quelconque des revendications précédentes, caractérisé en ce que le triglycéride alkoxylé est un triglycéride en C₁₂-C₂₂ alkoxylé, contenant environ de 1 à 60 motifs oxyalkylène

**5)** Procédé selon l'une quelconque des revendications précédentes, caractérisé en ce que l'acide gras alkoxylé est un acide gras en C₈-C₂₂, de préférence en C₁₀-C₂₀, alkoxylé contenant environ de 1 à 60 motifs oxyalkylène.

**6)** Procédé selon l'une quelconque des revendications précédentes, caractérisé en ce que le mélange aqueux à base d'argile comprend au moins 30% et, de préférence, plus de 70% en poids de particules solides, et en ce que la quantité de composition tensio-active introduite est de l'ordre de 0,1 à 10 %, et de préférence de l'ordre de 0,5% à 8% en poids par rapport au poids du mélange aqueux à base d'argile.

**7)** Utilisation du procédé faisant l'objet de l'une quelconque des revendications précédentes, pour l'extraction de matériaux argileux du sous-sol.

**8)** Mélange aqueux argileux, de maniabilité améliorée, caractérisé en ce qu'il comprend :
- 100 parties en poids d'un mélange aqueux à base d'argile contenant au moins 30% et, de préférence, plus de 70% en poids de particules solides
- et de l'ordre de 0,1 à 10 parties en poids, et de préférence de l'ordre de 0,5 à 8 parties en poids d'une composition tensio-active constituée de :
. 10 à 90 parties en poids, de préférence de 25 à 75 parties en poids, d'au moins un ester de carbohydrate et/ou un ester de polyol
. et de 90 à 10 parties en poids, de préférence de 75 à 25 parties en poids, d'un triglycéride alkoxylé et/ou au moins un acide gras alkoxylé.

**9)** Mélange aqueux argileux selon la revendication 8), caractérisé en ce que l'ester de polyol est un ester d'acide gras en C₈-C₂₂, de préférence en C₁₀-C₂₀, et de sorbitan, un ester d'acides gras en C₈-C₂₂, de préférence en C₁₀-C₂₀, et de glycérol, le polyglycérol polyricinoléate.

**10)** Mélange aqueux argileux selon la revendication 9) ou 10), caractérisé en ce que l'ester de carbohydrate est un sucroglycéride ou un sucroester.

**11)** Mélange aqueux argileux selon l'une quelconque des revendications 8) à 10), caractérisé en ce que le triglycéride alkoxylé est un triglycéride en C₁₂-C₂₂ alkoxylé, contenant environ de 1 à 60 motifs oxyalkylène

**12)** Mélange aqueux argileux selon l'une quelconque des revendications 8) à 11), caractérisé en ce que l'acide gras alkoxylé est un acide gras en C₈-C₂₂, de préférence en C₁₀-C₂₀, alkoxylé contenant environ de 1 à 60 motifs oxyalkylène.

**13)** Utilisation du mélange aqueux faisant l'objet de l'une quelconque des revendications 8) à 12), pour la préparation de matériaux divers.
